# FASCICULE DE BREVET EUROPEEN

(11) **EP 1 097 966 B1**
(45) Date de publication et mention de la délivrance du brevet: **08.09.2004**
(21) Numéro de dépôt: 00123711.4
(22) Date de dépôt: 31.10.2000
(51) Int. Cl.: C08L 21/00, B60C 1/00

(54) **Enveloppe de pneumatique dont les flancs comprennent une composition de caoutchouc vulcanisée**
Reifen, dessen Seitenwand eine vulkanisierte Kautschukzusammensetzung enthält
Tyre casing whereof the sidewalls comprise a vulcanised rubber composition

(30) Priorité: 08.11.1999 FR 9914097
(43) Date de publication de la demande: 09.05.2001
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Moreland, John Calloway, Greer, South Carolina 29650 (US); Ringot, Claude, 63200 Riom (FR); Pagano, Salvatore, 63100 Clermont-Ferrand (FR); Conger-Murray, Brooke, Austin, Texas 78730 (US); Cartoux, Janine, 63100 Clermont-Ferrand (FR)
(74) Mandataire: Hiebel, Robert

(56) Documents cités:
- US-A- 4 033 933
- DATABASE WPI Section Ch, Week 199335 Derwent Publications Ltd., London, GB; Class A11, AN 1993-278388 XP002140173 & JP 05 194790 A (OHTSU TIRE & RUBBER CO LTD), 3 août 1993 (1993-08-03)
- DATABASE WPI Section Ch, Week 199333 Derwent Publications Ltd., London, GB; Class A11, AN 1993-261779 XP002140174 & JP 05 179067 A (OHTSU TIRE & RUBBER CO LTD), 20 juillet 1993 (1993-07-20)

## Description

La présente invention concerne une enveloppe de pneumatique comportant des flancs qui comprennent une composition de caoutchouc vulcanisée à base d'une matrice élastomère. L'invention s'applique notamment à la protection de ladite enveloppe contre les effets des migrations d'agents anti-oxydants et anti-ozonants présents dans lesdits flancs, effets qui sont visibles sur les faces externes respectives desdits flancs.

On sait que certaines compositions de caoutchouc sont très sensibles à l'action de l'ozone. C'est en particulier le cas de compositions vulcanisées à base de d'élastomères diéniques.

Lorsqu'un article comprenant une telle composition élastomère vulcanisée est soumis à des sollicitations statiques et dynamiques prolongées en présence d'ozone, apparaissent des craquelures ou fissures plus ou moins marquées qui sont visibles à la surface de l'article. Ces craquelures sont orientées sensiblement perpendiculairement au sens de ladite contrainte, et leur propagation sous l'effet de la persistance d'une telle contrainte peut provoquer à terme la rupture complète de l'article.

Pour minimiser ces effets de l'ozone, on a prévu d'intégrer dans ces articles et, en particulier, dans les flancs à base d'élastomères que comportent les enveloppes de pneumatiques, des agents anti-ozonants qui sont destinés à réduire la formation et la propagation des craquelures dans les conditions précitées, ainsi que des cires, qui sont destinées à former un revêtement protecteur à la surface des flancs de sorte à assurer une protection complémentaire sous des sollicitations statiques.

L'association de ces agents anti-ozonants et de ces cires a prouvé son efficacité pour la minimisation des craquelures à la surface des flancs.

Malheureusement, les agents anti-ozonants les plus efficaces se caractérisent aussi par une très forte aptitude à migrer à travers le substrat élastomère et à venir tacher et colorer les surfaces adjacentes audit substrat. Plus précisément, on voit apparaître à la surface desdits flancs des taches jaunâtres ou marron. Ce phénomène est connu sous le nom de « coloration ».

Le document de brevet japonais JP-A-5/194 790 divulgue l'utilisation, dans une composition de caoutchouc pour flancs de pneumatique comprenant au moins un élastomère, de plusieurs tensio-actifs polymériques spécifiques du type éther de polyoxyéthylène, dans le but de remédier à l'inconvénient précité dudit phénomène de « coloration ». Ces tensio-actifs particuliers sont caractérisés par une valeur HLB (hydrophilic- lipophilic balance) qui est comprise entre 10,7 et 15,0, et ils sont constitués de nonylphényléther de polyoxyéthylène, de stéaryléther de polyoxyéthylène ou d'oléyléther de polyoxyéthylène.

Le but de la présente invention est de proposer une enveloppe de pneumatique comportant des flancs qui comprennent une composition de caoutchouc vulcanisée à base d'une matrice élastomère, qui permette de remédier aux inconvénients générés par ledit phénomène de « coloration ».

A cet effet, une enveloppe de pneumatique selon l'invention est telle que ladite composition comprend, dans une quantité allant de 0,5 et 10 pce (parties en poids pour cent parties de ladite matrice élastomère), au moins un polymère qui comprend un radical oxy -O-et, relié audit radical oxy d'un côté de celui-ci, au moins un bloc polyoxyalcène répondant à la formule (CₙH₂ₙO)ₓ,
où n est un nombre entier qui est égal à 2 ou 3,
où x est un nombre entier ou décimal allant de 2 à 15,
ledit ou l'un desdits blocs étant relié à un atome d'hydrogène qui est situé à une extrémité de chaîne dudit ou de chaque polymère, de telle manière que ledit atome d'hydrogène forme une fonction alcool avec l'atome d'oxygène terminal dudit bloc,
   et la demanderesse a trouvé de manière inatttendue qu'il peut être avantageusement remédié aux inconvénients précités en utilisant, pour ledit ou l'un au moins desdits polymères, un polymère comprenant une partie aliphatique spécifique, qui est reliée audit radical oxy de l'autre côté de celui-ci et qui appartient au groupe constitué par

- un coupage de groupes aliphatiques alkyl dont le nombre moyen d'atomes de carbone varie sensiblement de 10 à 14, et
- un groupe aliphatique alkyl dont le nombre d'atomes de carbone est égal à 13.

Il est à noter que cette sélection spécifique et inattendue de ladite partie aliphatique permet d'obtenir un aspect uniformément noir et durable, pour les flancs des enveloppes correspondantes selon l'invention, ce qui améliore d'une manière significative l'aspect esthétique de ces enveloppes.

Selon un premier exemple de réalisation de l'invention, ladite partie aliphatique est constituée d'un coupage de groupes aliphatiques alkyl dont le nombre moyen d'atomes de carbone varie sensiblement de 10 à 14.

Selon un premier mode de réalisation dudit premier exemple, ledit nombre moyen d'atomes de carbone est sensiblement égal à 14, ledit ou l'un au moins desdits polymères correspondants comprenant alors un bloc unique polyoxyéthylène, dont le nombre x est égal à 4. Dans ce cas, la valeur HLB dudit polymère est sensiblement égale à 9,1.

On notera dans ce cas qu'une telle sélection de ladite partie aliphatique permet, non seulement d'obtenir une couleur noire pour la totalité de la surface externe desdits flancs, mais encore un aspect brillant pour ladite surface, ce qui améliore encore l'aspect desdits flancs.

Selon un second mode de réalisation dudit premier exemple, ledit nombre moyen d'atomes de carbone est sensiblement égal à 14, ledit ou l'un au moins desdits polymères correspondants comprenant alors
- un bloc polyoxypropylène dont le nombre x est égal à 5, et
- un bloc polyoxyéthylène dont le nombre x est égal à 4.

Dans ce cas, la valeur HLB dudit polymère est sensiblement égale à 9,5.

Selon un troisième mode de réalisation dudit premier exemple, ledit nombre moyen d'atomes de carbone est sensiblement égal à 12, ledit ou l'un au moins desdits polymères correspondants comprenant alors un bloc unique polyoxyéthylène, dont le nombre x est égal à 7. Dans ce cas, la valeur HLB dudit polymère est sensiblement égale à 12,6.

On obtient également, pour ce troisième mode, une couleur noire uniforme et un aspect brillant pour lesdits flancs.

Selon un quatrième mode de réalisation dudit premier exemple, ledit nombre moyen d'atomes de carbone est sensiblement égal à 14, ledit ou l'un au moins desdits polymères correspondants comprenant alors un bloc unique polyoxyéthylène, dont le nombre x est égal à 2. Dans ce cas, la valeur HLB dudit polymère est sensiblement égale à 5,9.

Selon un cinquième mode de réalisation dudit premier exemple, ledit nombre moyen d'atomes de carbone est sensiblement égal à 10, ledit ou l'un au moins desdits polymères correspondants comprenant alors un bloc unique polyoxyéthylène, dont le nombre x est égal à 2,5. Dans ce cas, la valeur HLB dudit polymère est sensiblement égale à 8,2.

Selon un second exemple de réalisation de l'invention, ladite partie aliphatique est constituée d'un groupe tridécyl, ledit ou l'un au moins desdits polymères correspondants comprenant alors un bloc unique polyoxyéthylène dont le nombre x est égal à 3. Dans ce cas, la valeur HLB dudit polymère est sensiblement égale à 8,6.

Par ailleurs, une enveloppe de pneumatique selon l'invention est telle que ladite composition de caoutchouc vulcanisée comprend au moins un agent anti-ozonant.

Les caractéristiques précitées de la présente invention, ainsi que d'autres, seront mieux comprises à la lecture de la description suivante de plusieurs exemples de réalisation de l'invention, donnés à titre illustratif et non limitatif.

On a fabriqué plusieurs enveloppes de pneumatique, chacune comportant des flancs qui comprennent une composition vulcanisée selon l'invention, que l'on a comparées à une enveloppe « témoin » dont les flancs comprennent une composition vulcanisée usuelle.

On a détaillé dans le tableau I ci-après toutes les compositions testées (composition témoin et compositions 1 à 8 selon l'invention), la quantité de chaque constituant étant exprimée en pce pour chacune desdites compositions (parties en poids pour cent parties de matrice élastomère, laquelle est constituée dans cet exemple de polybutadiène et de caoutchouc naturel).

Dans le tableau I:
▷ le noir de carbone est un noir de carbone de grade usuel pour carcasse de pneumatique,
▷ la cire est une cire anti-ozone,
▷ l'huile aromatique est une huile de haut poids moléculaire,
▷ « 6PPD » représente la N-(1,3-diméthyl butyl)-N'-phényl-p-phénylènediamine, agent à la fois anti-ozonant et anti-oxydant,
▷ « CBS » représente la N-cyclohexyl-benzothiazyl-sulfénamide, un accélérateur de vulcanisation.

De plus, chaque composition du tableau I comprend, de manière connue, un agent anti-oxydant, tel que la « TMQ » (abréviation représentant la triméthylquinoléine, une 1,2-dihydro-2,2,4-triméthylquinone polymérisée).
▷ Synperonic A4 est la dénomination commerciale d'un tensio-actif commercialisé par la société UNIQEMA, dont la valeur HLB est sensiblement égale à 9,1. Ce tensio-actif est constitué d'un polymère comprenant un coupage R de groupes aliphatiques alkyl et un bloc polyoxyéthylène, respectivement reliés à un radical oxy de formule -O- d'un côté de celui-ci et de l'autre, ledit polymère répondant à la formule

   R-O-(C₂H₄O)₄-H,

   où lesdits groupes alkyl comportent de 13 à 15 atomes de carbone (14 en moyenne). Plus précisément, ledit bloc polyoxyéthylène est relié à un atome d'hydrogène situé à une extrémité de chaîne dudit polymère, de telle manière que ledit atome d'hydrogène forme une fonction alcool avec l'atome d'oxygène terminal dudit bloc polyoxyéthylène.
▷ Synperonic LF/RA 280 est la dénomination commerciale d'un tensio-actif commercialisé par la société UNIQEMA, dont la valeur HLB est sensiblement égale à 9,5. Ce tensio-actif est constitué d'un polymère comprenant, d'une part, un coupage R de groupes aliphatiques alkyl et, d'autre part, deux blocs polyoxyéthylène et polyoxypropylène, respectivement reliés à un radical oxy de formule -O- d'un côté de celui-ci et de l'autre, ledit polymère répondant à la formule

   R-O-(C₃H₆O)₅-(C₂H₄O)₄-H,

   où lesdits groupes alkyl comportent de 13 à 15 atomes de carbone (14 en moyenne), et où l'atome d'hydrogène situé à une extrémité de chaîne dudit polymère forme également une fonction alcool avec l'atome d'oxygène terminal dudit bloc polyoxyéthylène.
▷ Synperonic L7 est la dénomination commerciale d'un tensio-actif commercialisé par la société UNIQEMA, dont la valeur HLB est sensiblement égale à 12,6. Ce tensio-actif est constitué d'un polymère comprenant un coupage R de groupes aliphatiques alkyl et un bloc polyoxyéthylène, respectivement reliés à un radical oxy de formule -O- d'un côté de celui-ci et de l'autre, ledit polymère répondant à la formule

   R-O-(C₂H₄O)₇-H,

   où lesdits groupes alkyl comportent un nombre moyen d'atomes de carbone qui est sensiblement égal à 12, et où l'atome d'hydrogène situé à une extrémité de chaîne dudit polymère forme également une fonction alcool avec l'atome d'oxygène terminal dudit bloc polyoxyéthylène.
▷ Synperonic A2 est la dénomination commerciale d'un tensio-actif commercialisé par la société UNIQEMA, dont la valeur HLB est sensiblement égale à 5,9. Ce tensio-actif est constitué d'un polymère comprenant un coupage R de groupes aliphatiques alkyl et un bloc polyoxyéthylène, respectivement reliés à un radical oxy de formule -O- d'un côté de celui-ci et de l'autre, ledit polymère répondant à la formule

   R-O-(C₂H₄O)₂-H,

   où lesdits groupes alkyl comportent un nombre moyen d'atomes de carbone qui est sensiblement égal à 14, et où l'atome d'hydrogène situé à une extrémité de chaîne dudit polymère forme également une fonction alcool avec l'atome d'oxygène terminal dudit bloc polyoxyéthylène.
▷ Synperonic 91/2,5 est la dénomination commerciale d'un tensio-actif commercialisé par la société UNIQEMA, dont la valeur HLB est sensiblement égale à 8,2. Ce tensio-actif est constitué d'un polymère comprenant un coupage R de groupes aliphatiques alkyl et un bloc polyoxyéthylène, respectivement reliés à un radical oxy de formule -O- d'un côté de celui-ci et de l'autre, ledit polymère répondant à la formule

   R-O-(C₂H₄O)_{2,5}-H,

   où lesdits groupes alkyl comportent de 9 à 11 atomes de carbone, et où l'atome d'hydrogène situé à une extrémité de chaîne dudit polymère forme également une fonction alcool avec l'atome d'oxygène terminal dudit bloc polyoxyéthylène.
▷ Synperonic 13/3 est la dénomination commerciale d'un tensio-actif commercialisé par la société UNIQEMA, dont la valeur HLB est sensiblement égale à 8,6. Ce tensio-actif est constitué d'un polymère comprenant un groupe tridécyl et un bloc polyoxyéthylène, respectivement reliés à un radical oxy de formule -O- d'un côté de celui-ci et de l'autre ledit polymère répondant à la formule

   C₁₃H₂₇-O-(C₂H₄O)₃-H,

   où l'atome d'hydrogène situé à une extrémité de chaîne dudit polymère forme également une fonction alcool avec l'atome d'oxygène terminal dudit bloc polyoxyéthylène.

**TABLEAU I**

| Constituants | «témoin» | Comp. 1 | Comp. 2 | Comp. 3 | Comp. 4 | Comp. 5 | Comp. 6 | Comp. 7 | Comp. 8 |
|---|---|---|---|---|---|---|---|---|---|
| polybutadiène | 65 | 65 | 65 | 65 | 65 | 65 | 65 | 65 | 65 |
| caoutchouc naturel | 35 | 35 | 35 | 35 | 35 | 35 | 35 | 35 | 35 |
| noir de carbone | 60 | 60 | 60 | 60 | 60 | 60 | 60 | 60 | 60 |
| cire | 1 | 1 | 1 | 1 | 1 | 1 | 1 | 1 | 1 |
| acide stéarique | 1 | 1 | 1 | 1 | 1 | 1 | 1 | 1 | 1 |
| ZnO | 3 | 3 | 3 | 3 | 3 | 3 | 3 | 3 | 3 |
| 6PPD | 3 | 3 | 3 | 3 | 3 | 3 | 3 | 3 | 3 |
| huile aromatique | 21 | 21 | 21 | 21 | 21 | 21 | 21 | 21 | 21 |
| soufre | 1,7 | 1,7 | 1,7 | 1,7 | 1,7 | 1,7 | 1,7 | 1,7 | 1,7 |
| CBS | 1 | 1 | 1 | 1 | 1 | 1 | 1 | 1 | 1 |
| Synperonic A4 | | 2 | 3 | | | | | | |
| Synperonic LF/RA 280 | | | | 2 | 3 | | | | |
| Synperonic L7 | | | | | | 2 | | | |
| Synperonic A2 | | | | | | | 2 | | |
| Synperonic 91/2,5 | | | | | | | | 2 | |
| Synperonic 13/3 | | | | | | | | | 2 |

On a testé chacune desdites enveloppes dont les flancs comprennent l'une des compositions précitées selon l'invention, afin d'évaluer les propriétés suivantes:
- valeurs de plasticité et de temps de grillage T5 en minutes, toutes deux mesurées selon la norme ASTM D1646;
- valeurs de dureté « Shore A », mesurées selon la norme ASTM D2240, avec un appareil répondant à la dénomination « Duromètre de type A »;
- valeurs de module d'élasticité à 300 % de déformation « M300 », mesurées selon la norme ASTM D412, méthode de test A.

### • Evaluation de l'étendue des craquelures et du phénomène de "coloration" après un test statique d'ozone « S18 » :

On a mis en oeuvre ce test sur des échantillons de caoutchouc comprenant respectivement ladite composition témoin et lesdites compositions 1 à 8 selon l'invention (appelé « Test Stat. » dans le tableau II):

On a réalisé ce test S18 en suivant la norme ASTM D1149, excepté pour les dimensions des échantillons. On a utilisé pour chaque échantillon testé des dimensions de 20 x 145 mm, au lieu des dimensions de 10 x 100 +/- 25 mm qui sont spécifiées dans ladite norme ASTM 149.

On a laissé chaque échantillon suspendu à une tige, pendant 2 jours dans un laboratoire (sous pression atmosphérique), puis pendant 14 jours dans une chambre à ozone (la concentration d'ozone est de 50 pphm (parties pour cent millions) dans cette chambre, à une température de 38° C).
a) On a ensuite évalué l'étendue des craquelures pour chaque échantillon, en utilisant trois paramètres a/ b/ c :
   le nombre a, la largeur b et la profondeur c des craquelures, les valeurs correspondant à chacun de ces trois paramètres pouvant varier selon une échelle subjective allant de 0 à 5 (plus ces valeurs sont élevées et plus le nombre, la largeur ou la profondeur des craquelures sont importants).
b) On a par ailleurs évalué pour chaque échantillon l'ampleur du phénomène de coloration au terme de ce test statique, au moyen d'une échelle subjective de valeurs qui est représentative de l'aspect final des échantillons.

Les valeurs de cette échelle subjective qui ont été respectivement obtenues pour les échantillons testés peuvent varier de 0 à 4, et elles figurent dans le tableau 11 ci-après à la ligne « aspect ».

Ces valeurs allant de 0 à 4 correspondent aux aspects suivants pour les échantillons:

| | |
|---|---|
| 4 | noir brillant; |
| 3 | noir; |
| 2 | noir mat; |
| 1 | légère coloration |
| 0 | coloration totale. |

On a également fait figurer dans ce tableau II la couleur correspondante de chaque échantillon qui est obtenue au terme dudit test statique.

### • Evaluation du phénomène de « coloration » suite à un test dynamique spécifique d'ozone :

On a mis en oeuvre ce test sur lesdits échantillons de caoutchouc « témoin » et selon l'invention (appelé Test Dyn. dans le tableau II),

Ce test dynamique spécifique que l'on a mis en oeuvre pour la présente invention dérive du test standard qui est connu sous le nom « Test Standard D25 », lequel est décrit dans la norme ASTM D3395, c'est-à-dire que l'on utilise la concentration d'ozone de 50 pphm à 38° C qui figure dans ladite norme.

Pour ce test spécifique que l'on a pratiqué ici, les dimensions de chaque échantillon sont également de 20 x 145 mm, au lieu des dimensions de 10 x 100 +/- 25 mm qui sont spécifiées dans la norme ASTM D3395.

Cependant, à la différence dudit « Test Standard D25 » qui est destiné à l'évaluation de l'étendue des craquelures, on a utilisé ici ledit test spécifique afin d'évaluer pour chaque échantillon l'ampleur du phénomène de coloration au terme dudit test, au moyen de l'échelle subjective précitée de valeurs (voir ligne « aspect » au tableau II),

Plus précisément, ledit test spécifique diffère en outre dudit « Test Standard D25 », en ce que l'on soumet chaque échantillon audit test pendant 10 jours environ (soit une semaine et demie), au lieu des 2 jours qui sont spécifiés dans ladite norme ASTM D3395.

Comme pour ledit test statique, on a également fait figurer dans le tableau II la couleur correspondante de chaque échantillon qui est obtenue au terme dudit test dynamique spécifique.

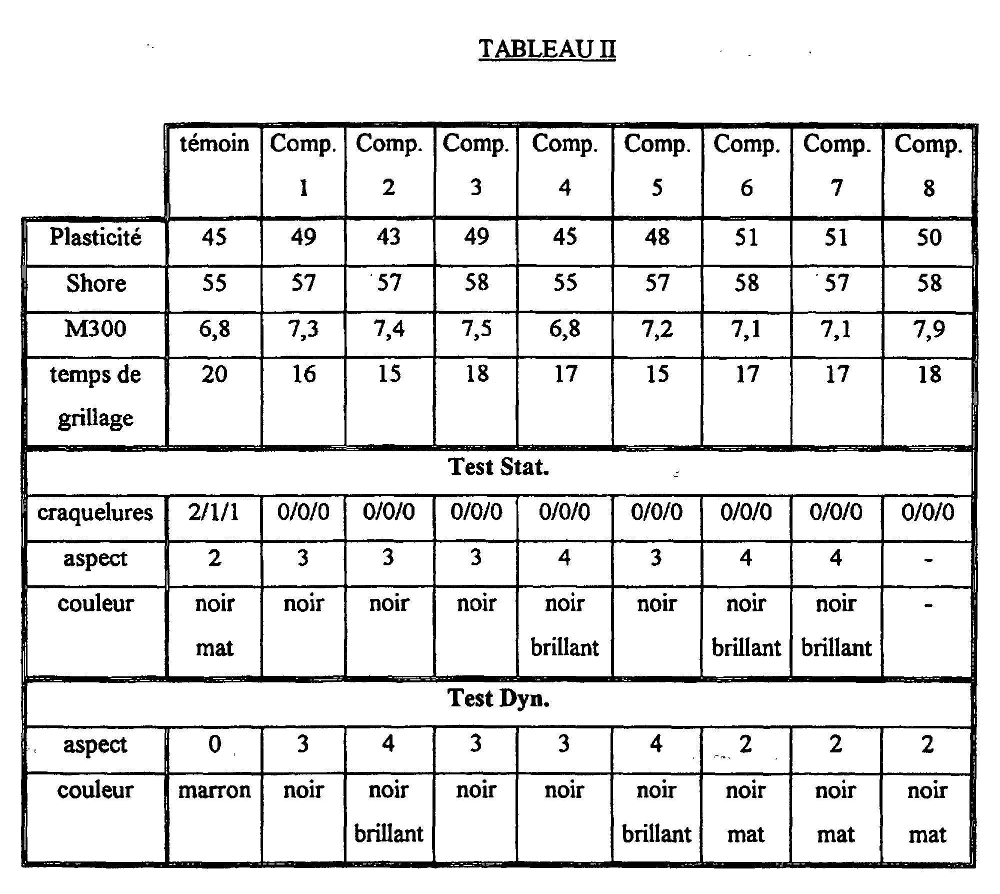

Ce tableau II montre que, suite à une exposition à une atmosphère d'ozone et en comparaison de l'échantillon « témoin », un échantillon comprenant l'une au choix des compositions vulcanisées selon l'invention ne présente pas de craquelure suite à une exposition statique à l'ozone, ni de tâche traduisant le phénomène de coloration (suite à des expositions aussi bien statiques que dynamiques). En effet, un tel échantillon selon l'invention présente une couleur uniformément noire, au lieu de la couleur marron de l'échantillon « témoin ».

S'agissant plus particulièrement des échantillons comprenant respectivement les compositions 2, 4, 5, 6 et 7 selon l'invention, ceux-ci présentent une couleur noire et en outre brillante, ce qui permet de rehausser encore l'aspect des flancs de pneumatique correspondants.

Ce tableau II montre également que les échantillons comprenant une composition selon l'invention présentent des propriétés mécaniques satisfaisantes.

Par ailleurs, on a examiné si la surface des échantillons selon l'invention demeurait intacte, suite à un traitement de lavage.

A cet effet, on a mis en oeuvre le Test Standard dynamique à l'ozone « D25 » précité pendant une durée de 2 semaines, en lavant chaque échantillon 6 fois d'une manière intermittente pendant ces 2 semaines.

On a utilisé plusieurs agents nettoyants pour le lavage de chaque échantillon, en particulier de l'eau déionisée et deux agents nettoyants pour pneumatiques qui sont respectivement commercialisés sous les dénominations « Bleche-White » et « Armor All ».

Suite à ces lavages, chaque échantillon comprenant une composition vulcanisée selon l'invention présentait une couleur uniformément noire, alors que ledit échantillon « témoin » comportait diverses taches de couleur marron, lesquelles étaient plus ou moins marquées selon l'agent nettoyant utilisé.

De plus, chaque échantillon comprenant une composition selon l'invention présentait beaucoup moins de craquelures que ledit échantillon « témoin », suite à ces trois lavages.

## Revendications

1. Enveloppe de pneumatique comportant des flancs qui comprennent une composition de caoutchouc vulcanisée à base d'une matrice élastomère, ladite composition comprenant, dans une quantité entre 0,5 et 10 pce (parties en poids pour cent parties de ladite matrice élastomère), au moins un polymère qui comprend un radical oxy -O- et, relié audit radical oxy d'un côté de celui-ci, au moins un bloc polyoxyalcène répondant à la formule (CₙH₂ₙO)ₓ,
où n est un nombre entier qui est égal à 2 ou 3,
où x est un nombre entier ou décimal allant de 2 à 15,
ledit ou l'un desdits blocs étant relié à un atome d'hydrogène qui est situé à une extrémité de chaîne dudit ou de chaque polymère, de telle manière que ledit atome d'hydrogène forme une fonction alcool avec l'atome d'oxygène terminal dudit bloc,
**caractérisée en ce que** ledit ou l'un au moins desdits polymères comprend une partie aliphatique, qui est reliée audit radical oxy de l'autre côté de celui-ci et qui appartient au groupe constitué par:
- un coupage de groupes aliphatiques alkyl dont le nombre moyen d'atomes de carbone varie sensiblement de 10 à 14, et
- un groupe aliphatique alkyl dont le nombre d'atomes de carbone est égal à 13.

2. Enveloppe de pneumatique selon la revendication 1, **caractérisée en ce que** ladite partie aliphatique est constituée d'un coupage de groupes aliphatiques alkyl dont le nombre moyen d'atomes de carbone varie sensiblement de 10 à 14.

3. Enveloppe de pneumatique selon la revendication 2, **caractérisée en ce que** ledit nombre moyen d'atomes de carbone est sensiblement égal à 14, ledit ou l'un au moins desdits polymères correspondants comprenant un bloc unique polyoxyéthylène, dont le nombre x est égal à 4.

4. Enveloppe de pneumatique selon la revendication 3, **caractérisée en ce que** la valeur HLB dudit polymère est sensiblement égale à 9,1.

5. Enveloppe de pneumatique selon la revendication 2, **caractérisée en ce que** ledit nombre moyen d'atomes de carbone est sensiblement égal à 14, ledit ou l'un au moins desdits polymères correspondants comprenant
- un bloc polyoxypropylène dont le nombre x est égal à 5, et
- un bloc polyoxyéthylène dont le nombre x est égal à 4.

6. Enveloppe de pneumatique selon la revendication 5, **caractérisée en ce que** la valeur HLB dudit polymère est sensiblement égale à 9,5.

7. Enveloppe de pneumatique selon la revendication 2, **caractérisée en ce que** ledit nombre moyen d'atomes de carbone est sensiblement égal à 12, ledit ou l'un au moins desdits polymères correspondants comprenant un bloc unique polyoxyéthylène, dont le nombre x est égal à 7.

8. Enveloppe de pneumatique selon la revendication 7, **caractérisée en ce que** la valeur HLB dudit polymère est sensiblement égale à 12,6.

9. Enveloppe de pneumatique selon la revendication 2, **caractérisée en ce que** ledit nombre moyen d'atomes de carbone est sensiblement égal à 14, ledit ou l'un au moins desdits polymères correspondants comprenant un bloc unique polyoxyéthylène, dont le nombre x est égal à 2.

10. Enveloppe de pneumatique selon la revendication 9, **caractérisée en ce que** la valeur HLB dudit polymère est sensiblement égale à 5,9.

11. Enveloppe de pneumatique selon la revendication 2, **caractérisée en ce que** ledit nombre moyen d'atomes de carbone est sensiblement égal à 10, ledit ou l'un au moins desdits polymères correspondants comprenant un bloc unique polyoxyéthylène, dont le nombre x est égal à 2,5.

12. Enveloppe de pneumatique selon la revendication 11, **caractérisée en ce que** la valeur HLB dudit polymère est sensiblement égale à 8,2.

13. Enveloppe de pneumatique selon la revendication 1, **caractérisée en ce que** ladite partie aliphatique est constituée d'un groupe tridécyl, ledit ou l'un au moins desdits polymères correspondants comprenant un bloc unique polyoxyéthylène dont le nombre x est égal à 3.

14. Enveloppe de pneumatique selon la revendication 13, **caractérisée en ce que** la valeur HLB dudit polymère est sensiblement égale à 8,6.

15. Enveloppe de pneumatique selon une des revendications précédentes, **caractérisée en ce que** ladite composition de caoutchouc vulcanisée comprend au moins un agent anti-ozonant.

## Patentansprüche

1. Reifenmantel mit Flanken, die eine Zusammensetzung aus vulkanisiertem Kautschuk auf der Basis einer Elastomermatrix aufweisen, wobei die genannte Zusammensetzung in einer Menge zwischen 0,5 und 10 phr (Gewichtsteile pro hundert Teile der genannten Elastomermatrix) mindestens ein Polymer aufweist, das ein Oxy-Radikal
-O- und, mit dem genannten Oxy-Radikal auf dessen einer Seite
verbunden, mindestens einen Polyoxyalkenblock aufweist, der der Formel (CₙH₂ₙO)ₓ entspricht,
worin n eine ganze Zahl von 2 oder 3 ist und
worin x eine ganze Zahl oder eine Dezimalzahl von 2 bis 15 ist,
wobei der genannte Block oder einer der genannten Blöcke mit einem Wasserstoffatom verbunden ist, das sich an einem Ende der Kette des Polymers oder jedes Polymers befindet, so dass das genannte Wasserstoffatom mit dem Sauerstoffatom, das sich am Ende des genannten Blocks befindet, eine Alkoholfunktion bildet,
**dadurch gekennzeichnet, dass** das genannte oder mindestens eines der genannten Polymeren einen aliphatischen Teil aufweist, der mit der anderen Seite des genannten Oxy-Radikals verbunden ist und der zur Gruppe gehört, die gebildet ist durch
- einen Verschnitt von aliphatischen Alkylgruppen, deren mittlere Anzahl von Kohlenstoffatomen im Wesentlichen im Bereich von 10 bis 14 liegt, und
- eine aliphatische Alkylgruppe, deren Anzahl von Kohlenstoffatomen gleich 13 ist.

2. Reifenmantel nach Anspruch 1, **dadurch gekennzeichnet, dass** der genannte aliphatische Anteil durch einen Verschnitt von aliphatischen Alkylgruppen gebildet ist, dessen mittlere Anzahl von Kohlenstoffatomen im Wesentlichen im Bereich von 10 bis 14 liegt.

3. Reifenmantel nach Anspruch 2, **dadurch gekennzeichnet, dass** die genannte mittlere Anzahl von Kohlenstoffatomen im Wesentlichen gleich 14 ist, wobei das genannte oder mindestens eines der genannten entsprechenden Polymeren einen einzigen Polyoxyethylenblock aufweist, bei dem die Zahl x gleich 4 ist.

4. Reifenmantel nach Anspruch 3, **dadurch gekennzeichnet, dass** der HLB (hydrophilic/lipophilic balance)-Wert des genannten Polymers im Wesentlichen gleich 9,1 ist.

5. Reifenmantel nach Anspruch 2, **dadurch gekennzeichnet, dass** die genannte mittlere Anzahl von Kohlenstoffatomen im Wesentlichen gleich 14 ist, wobei das genannte oder mindestens eines der genannten entsprechenden Polymeren
- einen Polyoxypropylenblock, bei dem die Zahl x gleich 5 ist, und
- einen Polyoxyethylenblock, bei dem die Zahl x gleich 4 ist, aufweist.

6. Reifenmantel nach Anspruch 5, **dadurch gekennzeichnet, dass** der HLB-Wert des genannten Polymers im Wesentlichen gleich 9,5 ist.

7. Reifenmantel nach Anspruch 2, **dadurch gekennzeichnet, dass** die genannte mittlere Anzahl von Kohlenstoffatomen im Wesentlichen gleich 12 ist, wobei das genannte oder mindestens eines der genannten entsprechenden Polymeren einen einzigen Polyoxyethylenblock aufweist, bei dem die Zahl x gleich 7 ist.

8. Reifenmantel nach Anspruch 7, **dadurch gekennzeichnet, dass** der HLB-Wert des genannten Polymers im Wesentlichen gleich 12,6 ist.

9. Reifenmantel nach Anspruch 2, **dadurch gekennzeichnet, dass** die genannte mittlere Anzahl von Kohlenstoffatomen im Wesentlichen gleich 14 ist, wobei das genannte oder mindestens eines der genannten entsprechenden Polymeren einen einzigen Polyoxyethylenblock aufweist, bei dem die Zahl x gleich 2 ist.

10. Reifenmantel nach Anspruch 9, **dadurch gekennzeichnet, dass** der HLB-Wert des genannten Polymers im Wesentlichen gleich 5,9 ist.

11. Reifenmantel nach Anspruch 2, **dadurch gekennzeichnet, dass** die genannte mittlere Anzahl von Kohlenstoffatomen im Wesentlichen gleich 10 ist, wobei das genannte oder mindestens eines der genannten entsprechenden Polymeren einen einzigen Polyoxyethylenblock aufweist, bei dem die Zahl x gleich 2,5 ist.

12. Reifenmantel nach Anspruch 11, **dadurch gekennzeichnet, daß** der HLB-Wert des genannten Polymers im Wesentlichen gleich 8,2 ist.

13. Reifenmantel nach Anspruch 1, **dadurch gekennzeichnet, dass** der genannte aliphatische Teil von einer Tridecylgruppe gebildet ist, wobei das genannte oder mindestens eines der genannten entsprechenden Polymeren einen einzigen Polyoxyethylenblock aufweist, bei dem die Zahl x gleich 3 ist.

14. Reifenmantel nach Anspruch 13, **dadurch gekennzeichnet, dass** der HLB-Wert des genannten Polymers im Wesentlichen gleich 8,6 ist.

15. Reifenmantel nach einem der vorangehenden Ansprüche, **dadurch gekennzeichnet, dass** die genannte vulkanisierte Kautschukzusammensetzung mindestens ein Ozonschutzmittel aufweist.

## Claims

1. A tyre comprising sidewalls which comprise a vulcanised rubber composition based on an elastomeric matrix, said composition comprising, in a quantity comprised between 0.5 phr and 10 phr (parts by weight per hundred parts of said elastomeric matrix), at least one polymer which comprises an oxy radical -O- and, linked to the one side of said oxy radical, at least one polyoxyalkylene block of the formula (CₙH₂ₙO)ₓ,
where n is an integer that is equal to 2 or 3,
where x is an integer or decimal number of from 2 to 15,
said block or one of said blocks being linked to a hydrogen atom which is located at one chain end of said or each polymer, in such a manner that said hydrogen atom forms an alcohol function with the terminal oxygen atom of said block,
**characterised in that** said polymer or at least one of said polymers comprises an aliphatic part, linked to the other side of said oxy radical, which belongs to the group consisting of
- a blend of aliphatic alkyl groups whose average number of carbon atoms varies substantially from 10 to 14, and
- an aliphatic alkyl group whose number of carbon atoms is equal to 13.

2. A tyre according to claim 1, **characterised in that** said aliphatic part is formed of a blend of aliphatic alkyl groups whose average number of carbon atoms varies substantially from 10 to 14.

3. A tyre according to claim 2, **characterised in that** said average number of carbon atoms is substantially equal to 14, said polymer or one at least of said corresponding polymers comprising a single polyoxyethylene block whose number x is equal to 4.

4. A tyre according to claim 3, **characterised in that** the HLB value of said polymer is substantially equal to 9.1.

5. A tyre according to claim 2, **characterised in that** said average number of carbon atoms is substantially equal to 14, said polymer or one at least of said corresponding polymers comprising
- a polyoxypropylene block whose number x is equal to 5, and
- a polyoxyethylene block whose number x is equal to 4.

6. A tyre according to claim 5, **characterised in that** the HLB value of said polymer is substantially equal to 9.5.

7. A tyre according to claim 2, **characterised in that** said average number of carbon atoms is substantially equal to 12, said polymer or one at least of said corresponding polymers comprising a single polyoxyethylene block whose number x is equal to 7.

8. A tyre according to claim 7, **characterised in that** the HLB value of said polymer is substantially equal to 12.6.

9. A tyre according to claim 2, **characterised in that** said average number of carbon atoms is substantially equal to 14, said polymer or one at least of said corresponding polymers comprising a single polyoxyethylene block whose number x is equal to 2.

10. A tyre according to claim 9, **characterised in that** the HLB value of said polymer is substantially equal to 5.9.

11. A tyre according to claim 2, **characterised in that** said average number of carbon atoms is substantially equal to 10, said polymer or one at least of said corresponding polymers comprising a single polyoxyethylene block whose number x is equal to 2.5.

12. A tyre according to claim 11, **characterised in that** the HLB value of said polymer is substantially equal to 8.2.

13. A tyre according to claim 1, **characterised in that** said aliphatic part consists of a tridecyl group, said polymer or one at least of said corresponding polymers comprising a single polyoxyethylene block whose number x is equal to 3.

14. A tyre according to claim 13, **characterised in that** the HLB value of said polymer is substantially equal to 8.6.

15. A tyre according to one of the preceding claims, **characterised in that** said vulcanised rubber composition comprises at least one antiozonant compound.
